# FASCICULE DE BREVET EUROPEEN

(11) **EP 0 594 821 B1**
(45) Date de publication et mention de la délivrance du brevet: **12.03.1997**
(21) Numéro de dépôt: 93910107.7
(22) Date de dépôt: 11.05.1993
(51) Int. Cl.: F16L 3/22, H02G 3/04

(54) **GOULOTTE DE CABLAGE APPORTANT UNE AIDE SIMPLE AU CABLAGE**
KABELKANAL ZUM EINFACHEN HELFEN BEI DEM KABELVERLEGEN
CABLE TROUGH FACILITATING CABLE LAYING

(30) Priorité: 12.05.1992 FR 9205740
(43) Date de publication de la demande: 04.05.1994
(73) Titulaire: PLANET-WATTOHM, 60300 Senlis (FR)
(72) Inventeur: LAIGLE, Jean, F-93700 Drancy (FR)
(74) Mandataire: CABINET BONNET-THIRION
(86) Numéro de dépôt international: FR9300454
(87) Numéro de publication internationale: WO9323694

(56) Documents cités:
- GB-A- 2 097 599
- US-A- 3 705 949

## Description

L'invention se rapporte à une goulotte de câblage, notamment pour câbles électriques et concerne plus particulièrement un perfectionnement permettant d'assurer un maintien provisoire des câbles dans ladite goulotte pendant la pose, facilitant les opérations de câblage mais pouvant également rester en place après.

On connaît une goulotte de câblage en matière plastique constituée d'un profilé à section transversale globalement en forme de U et présentant de ce fait une ouverture longitudinale s'étendant continûment sur sa longueur. Cette ouverture longitudinale est fermée, à la fin du câblage, par un couvercle constitué par un autre profilé en matière plastique à profil en U. La goulotte et le couvercle présentent, le long de leurs bords libres, des particularités de forme permettant un emboîtement à force. La goulotte est destinée à être fixée le long d'un mur dans une armoire électrique, ou installée dans la structure d'un faux plafond, par exemple. Cette goulotte comporte en outre des ouvertures, sur ses deux parois parallèles, pour permettre d'introduire ou de faire sortir des câbles à des endroits choisis le long du chemin de câblage. La nature semi-rigide des câbles les rend difficiles à maintenir en position dans la goulotte, sur une grande longueur, pendant toutes les opérations de câblage, c'est-à-dire avant la mise en place du couvercle. Le brevet US 3 705 949 décrit une goulotte pourvue d'ouvertures rectangulaires formant des glissières pour des éléments de retenue spécifiques.

Par des moyens simples, ne nécessitant aucune pièce spécifique, l'invention offre une assistance à la pose permettant de stabiliser les câbles dans la goulotte pendant toutes les opérations de câblage, au fur et à mesure que ceux-ci sont mis en place et connectés et jusqu'à la fermeture de la goulotte par ledit couvercle.

Plus précisément, l'invention concerne une goulotte de câblage à section transversale globalement en forme de U, comportant deux parois parallèles munies de fentes semblables, globalement parallèles et débouchant sur le bord de l'ouverture longitudinale de ladite goulotte pour définir entre elles des sortes de dents de peigne sur lesdites parois parallèles, afin de permettre le passage de câbles, caractérisée en ce que certaines dents particulières agencées par paires transversalement en regard l'une de l'autre dans lesdites parois parallèles, comportent respectivement deux trous circulaires en vis-à-vis, pratiqués au voisinage de l'ouverture longitudinale dudit profilé et conformés pour permettre l'insertion, transversalement et d'une paroi à l'autre, d'éléments de retenue provisoires, tels que clous, morceaux de fil électrique ou autre, pour faciliter la pose des câbles.

Les éléments de retenue peuvent être constitués par des pièces très diverses, disponibles sur le chantier, par exemple des clous ou même des morceaux de fil électrique. Les éléments de retenue peuvent ainsi être enlevés puis aussitôt remis en place dans la goulotte et ceci au fur et à mesure tout le long de ladite goulotte, lorsqu'on y installe un nouveau câble.

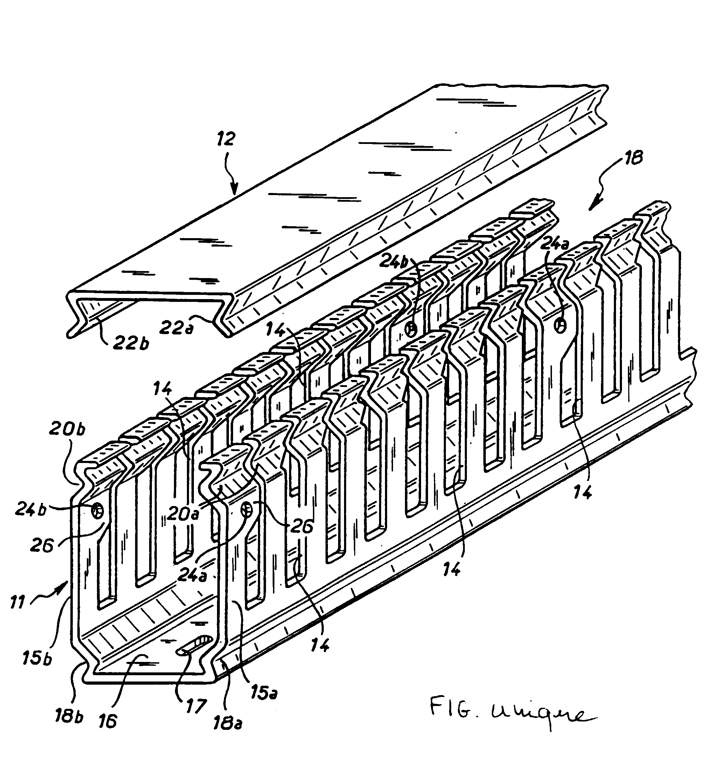

L'invention sera mieux comprise et d'autres avantages de celle-ci apparaîtront plus clairement à la lumière de la description qui va suivre d'un mode de réalisation d'une goulotte de câblage conforme à son principe, donnée uniquement à titre d'exemple et faite en référence au dessin annexé dans lequel:

la figure unique est une vue partielle en perspective d'une goulotte de câblage conforme à l'invention.

En se référant au dessin, on a représenté une goulotte de câblage 11, en matière plastique complétée par son couvercle 12, du même matériau. La goulotte 11 est un profilé à section transversale globalement en forme de U et muni de découpes 14 pratiquées sur ses deux parois parallèles 15a, 15b. Ces deux parois parallèles s'étendent à partir d'une paroi de fond 16 définissant, en section transversale, la base du U. La paroi de fond 16 comporte, à intervalles réguliers, des trous 17 pour la fixation du profilé à une structure porteuse. L'ouverture longitudinale continue 18, délimitée par les deux bords libres des parois 15a et 15b, est destinée à être coiffée par le couvercle 12 venant s'emboîter entre les parois 15a et 15b. Dans l'exemple, les découpes 14 s'étendant sur chaque paroi 15a, 15b ont la forme de fentes semblables, globalement parallèles et débouchant respectivement, sur le bord correspondant de l'ouverture longitudinale 18 de la goulotte. L'ensemble de ces fentes parallèles donne ainsi à chaque paroi 15a, 15b la forme d'une sorte de peigne, les dents étant définies par les parties de la paroi délimitée entre les découpes 14. La goulotte comporte en outre deux gorges longitudinales externes 20a, 20b s'étendant au voisinage des bords de l'ouverture 18, légèrement en retrait de celle-ci. Par ailleurs, le couvercle 12 qui est un profilé de matière plastique ayant également globalement une section transversale en U relativement plat, a ses faces parallèles conformées avec deux nervures internes 22a, 22b en vis-à-vis et susceptibles de s'emboîter dans les gorges 20a, 20b. Cette conformation des parois de la goulotte et du couvercle permet un emboîtement à force de ce dernier, en mettant à profit la relative élasticité des parois 15a, 15b de la goulotte. Cette dernière est également pourvue, de part et d'autre de la paroi de fond 16, de deux gorges extérieures rentrantes 18a, 18b, telles que le couvercle puisse aussi s'emboîter, provisoirement, sur le fond de la goulotte. De cette façon, le couvercle est livré emboîté sur ce fond et ne peut être perdu avant la mise en place de la goulotte.

Selon l'invention, la goulotte 11 comporte, à certains emplacements espacés longitudinalement, des paires de trous circulaires 24a, 24b définis, en vis-à-vis dans les parois parallèles 15a, 15b, respectivement. Ces trous en vis-à-vis permettent l'insertion provisoire d'éléments de retenue (clous, morceaux de fils électriques, etc...) transversalement dans la goulotte. Ceci permet d'emprisonner et maintenir les câbles déjà insérés dans la goulotte.

Bien entendu, les trous 24a, 24b sont pratiqués au voisinage de l'ouverture longitudinale 18 de la goulotte pour permettre de loger un grand nombre de câbles dans ladite goulotte. Les trous sont pratiqués à espacement constant sur toute la longueur du profilé en U constituant la goulotte.

Dans l'exemple représenté, certaines "dents de peigne" définies entre les découpes 14 comportent des élargissements 26 au voisinage de l'ouverture 18, les trous 24a, 24b étant pratiqués dans de tels élargissements.

La mise en oeuvre de la goulotte de câblage qui vient d'être décrite est grandement simplifiée par la présence des trous, conforme à l'invention. En effet, une fois que la goulotte provisoirement débarrassée de son couvercle, est fixée à une structure porteuse adéquate, et que le chemin de câblage est ainsi défini, les différents câbles peuvent être introduits dans la goulotte les uns après les autres et ils y sont maintenus provisoirement par la mise en place des éléments de retenue (non représentés) s'étendant chacun transversalement entre deux trous 24a, 24b situés en vis-à-vis. La mise en place d'un nouveau câble peut se faire progressivement, en enlevant au fur et à mesure, les éléments de retenue un par un et en les remettant en place presque aussitôt, après avoir introduit le nouveau câble dans la goulotte.

## Revendications

1. Goulotte de câblage à section transversale globalement en forme de U, comportant deux parois parallèles munies de fentes semblables, globalement parallèles et débouchant sur le bord de l'ouverture longitudinale de ladite goulotte pour définir entre elles des sortes de dents de peigne sur lesdites parois parallèles, afin de permettre le passage de câbles, caractérisée en ce que certaines dents particulières agencées par paires transversalement en regard l'une de l'autre dans lesdites parois parallèles, comportent respectivement deux trous circulaires (24a, 24b) en vis-à-vis, pratiqués au voisinage de l'ouverture longitudinale (18) dudit profilé et conformés pour permettre l'insertion, transversalement et d'une paroi à l'autre, d'éléments de retenue provisoires, tels que clous, morceaux de fil électrique ou autre, pour faciliter la pose des câbles.

2. Goulotte de câblage selon la revendication 1, caractérisée en ce que lesdites dents particulières comportant lesdits trous, sont définies à espacement constant sur la longueur dudit profilé.

3. Goulotte de câblage selon la revendication 1 ou 2, caractérisée en ce que lesdites dents particulières comportent chacune un élargissement au voisinage de ladite ouverture longitudinale, dans lequel est pratiqué le trou (24a, 24b) correspondant.

## Patentansprüche

1. Verkabelungsrinne mit im wesentlichen U-förmigem Querschnitt, umfassend zwei parallele Wände, die mit gleichartigen Schlitzen versehen sind, die im wesentlichen parallel sind und am Rand der Längsöffnung der Rinne ausmünden, um auf den parallelen Wänden miteinander eine Art von Kammzähnen zum Durchgang der Kabel zu bilden, dadurch gekennzeichnet, daß einige besondere, in diesen parallelen Wänden paarweise in Querrichtung einander gegenüber angeordnete Zähne jeweils zwei einander gegenüberliegende kreisförmige Löcher (24a, 24b) aufweisen, die in Nähe der Längsöffnung (18) dieses Profilteils angeordnet sind und so ausgebildet sind, daß sie zur Erleichterung der Verlegung der Kabel das Einsetzen von provisorischen Zurückhalteelementen, wie Nägeln, Elektrodrahtstücken oder anderen in Querrichtung von einer Wand zur anderen gestatten.

2. Verkabelungsrinne nach Anspruch 1, dadurch gekennzeichnet, daß diese die Löcher aufweisenden besonderen Zähne auf der Länge des Profilteils in konstantem Abstand angeordnet sind.

3. Verkabelungsrinne nach Anspruch 1 oder 2, dadurch gekennzeichnet, daß diese besonderen Zähne in Nähe der Längsöffnung jeweils eine Verbreiterung aufweisen, in der das entsprechende Loch (24a, 24b) vorgesehen ist.

## Claims

1. A cabling channel of generally U-shaped cross-section comprising two parallel walls provided with similar, generally parallel slots which open at the edge of the longitudinal aperture of said channel to define between them kinds of comb teeth on said parallel walls in order to permit the passage of cables characterised in that some particular teeth which are arranged in pairs transversely in mutually opposite relationship in said parallel walls respectively comprise two circular mutually opposite holes (24a, 24b) provided in the vicinity of the longitudinal aperture (18) of said shaped member and shaped to permit the insertion transversely and from one wall to the other of provisional retaining elements such as nails, pieces of electric wire or the like, to facilitate laying the cables in position.

2. A cabling channel according to claim 1 characterised in that said particular teeth comprising said holes are defined at a constant spacing over the length of said shaped member.

3. A cabling channel according to claim 1 or claim 2 characterised in that said particular teeth each comprise an enlargement portion in the vicinity of said longitudinal aperture, in which enlargement portion the corresponding hole (24a, 24b) is provided.
